# EUROPEAN PATENT APPLICATION

(11) **EP 3 348 848 A1**
(43) Date of publication of application: **18.07.2018**
(21) Application number: 18151749.1
(22) Date of filing: 15.01.2018
(51) Int. Cl.: F16B 41/00, F16B 5/02, F16B 25/00

(54) **AN IMPROVED FASTENING ARRANGEMENT**

(30) Priority: 13.01.2017 GB 201700657
(71) Applicant: Keylite Roof Windows Limited, Cookstown, Tyrone BT80 9LU (GB)
(72) Inventor: DUFFIN, John, Cookstown Tyrone BT80 9LU (GB)
(74) Representative: Hanna, John Philip

(57) **Abstract**

A fastening arrangement for fastening a first component to a second component via an aperture in the first component and/or in an appropriate fixing attachment. The fastening arrangement comprising an elongate body and means for preventing the fastening means from falling out of the aperture in the first component and/or in an appropriate fixing attachment in any direction prior to fastening and/or after unfastening the first component to and/or from the second component.

## Description

The present invention relates to an improved fastening arrangement.

Flashings are implemented around a roof window during the installation process as an efficient means to ensure the border of the window is watertight. Accordingly, one effective way of fastening the flashing to the window frame is by using a screw. Implementing this joining method is advantageous as screws are relatively inexpensive and easy to use. However, whilst loose, be it prior to implementation or upon removal from the frame, they are susceptible to being dropped, either by the installer or through the hole in the frame/flashing, and lost owing to them being relatively small and thin. This is particularly problematic in the case of a roof window as, if dropped, it can fall from height to the ground being impossible to retrieve and posing danger to passers-by.

Furthermore, it makes retrieval by the installer awkward as they may have to abandon the window at a crucial point in the process to get a screw causing disruption to the installation process in its entirety. Using a partially threaded screw (one in which only the bottom half of the shaft is threaded) as opposed to a regular screw (threaded from point to head) somewhat addresses the issue. However, the partially threaded screw is still capable of passing through the hole in the flashing as the maximum outside diameter of the threaded part of the partially threaded screw must be just less than the inside diameter of the hole in the flashing. This is to allow the screw to pass through the hole in the flashing in the first place.

The installer would be able to unscrew the partially threaded screw without fully removing the partially threaded screw from the hole in the flashing. The fact the installer then must concentrate on keeping the partially threaded screw in the flashing imposes an onerous element of due care and attention on the installer putting the safety of someone who is already working at height at further risk.

A screw that incorporates a washer-like disc into its make-up would prevent the screw from falling through the hole, however integrating a washer between the head and threaded part of the body in a partially threaded screw arrangement proves problematic.

It is an object of the present invention to obviate or mitigate the problem of losing screws while securing one component such as a flashing around the frame to another component such as a roof window.

Accordingly, the present invention provides a fastening means for fastening a first component to a second component via an aperture in the first component and/or in an appropriate fixing attachment thereof, the fastening means comprising an elongate body and means for preventing the fastening means from falling out of the aperture in the first component and/or in an appropriate fixing attachment thereof in any direction prior to fastening and/or after unfastening the first component to and/or from the second component.

Ideally, the means for preventing the fastening means from falling out of the aperture in the first component and/or in an appropriate fixing attachment thereof in any direction comprises a member on the fastening means on both sides of the aperture in the first component, the members having a greater maximum width than the maximum width of the aperture.

Ideally, the means for preventing the fastening means from falling out of the aperture in the first component and/or in an appropriate fixing attachment thereof in any direction comprises means for preventing the elongate body of the fastening means from falling out of the aperture in the first component and/or in an appropriate fixing attachment thereof in any direction.

Ideally, the means for preventing the elongate body of the fastening means from falling out of the aperture in any direction comprises a member on the fastening means on both sides of the aperture in the first component, the members having a greater maximum width than the maximum width of the aperture.

By width we mean the width of the member when extending radially outwardly from the longitudinal axis of the elongate body.

By maximum width we mean the maximum width of the member relative to the width of the aperture of the first component when the members are mounted on the fastening means which is located in the aperture and the members are orientated substantially parallel to the main plane of the first component defining the aperture therein
Ideally, the elongate body of the fastening means has a threaded part and an unthreaded part.

Ideally, the threaded part of the elongate body of the fastening means has a maximum width that is greater than the maximum width of the unthreaded part of the elongate body of the fastening means.

Ideally, the maximum width of the threaded part of the elongate body expands beyond the maximum width of the unthreaded part of the elongate body, thereby defining a shoulder.

Ideally, the maximum width of the threaded part of the elongate body of the fastening means will be equal to or have a slightly smaller width than the maximum width of aperture in the first component and/or the maximum width of an aperture in an appropriate fixing attachment thereof.

Ideally, the maximum width of the means for preventing the fastening means from falling out of the aperture of the first component should be greater than the maximum width of the aperture in the first component and/or the maximum width of an aperture in a fixing attachment thereof.

Ideally, the maximum width of the means for preventing the elongate body of the fastening means from falling out of the aperture of the first component should be greater than the maximum width of the aperture in the first component and/or the maximum width of an aperture in a fixing attachment thereof.

Ideally, at least part of the means for preventing the fastening means from falling out of the aperture of the first component and/or an appropriate fixing means thereof comprises a means for receiving the elongate body.

Ideally, the means for receiving the elongate body enables the means for preventing the fastening means from falling out of the aperture of the first component and/or an appropriate fixing means thereof to receive at least part of the elongate body.

Ideally, the means for receiving the elongate body comprising elongate body engagement means.

Ideally, the engagement means comprising the internal facing face of the means for preventing the fastening means from falling out of the aperture of the first component and/or an appropriate fixing means thereof.

By internal facing face we mean the face, edge, or border of the means for preventing the fastening means from falling out of the aperture of the first component and/or an appropriate fixing means thereof that is located proximal to the outer perimeter of the elongate body of the fastening means in situ.

Ideally, at least part of the means for preventing the fastening means from falling out of the aperture of the first component and/or an appropriate fixing means thereof comprises a continuous member.

Ideally, at least part of the means for preventing the fastening means from falling out of the aperture of the first component and/or an appropriate fixing means thereof comprises a continuous annular disc.

Ideally, at least part of the means for preventing the fastening means from falling out of the aperture of the first component and/or an appropriate fixing means thereof comprises an annular disc.

Ideally, the means for receiving the elongate body comprising a through-bore hole for receiving the elongate body.

Ideally, the means for receiving the elongate body comprising a through-bore hole for receiving the unthreaded part of the elongate body.

Ideally, the maximum width of the through-bore hole of the part of the means for preventing the fastening means from falling out of the aperture of the first component and/or an aperture of an appropriate fixing means thereof is less than the maximum width of the threaded part of the elongate body.

Ideally, the maximum width of the through-bore hole of the part of the means for preventing the elongate body of the fastening means from falling out of the aperture of the first component and/or an aperture of an appropriate fixing means thereof is less than the maximum width of the threaded part of the elongate body.

Ideally, the maximum width of the through-bore hole in part of the means for preventing the fastening means from falling out of the aperture shall have a greater maximum width than the maximum width of the unthreaded part of the elongate body of the fastening means.

Ideally, the maximum width of the through-bore hole in part of the means for preventing the elongate body of the fastening means from falling out of the aperture shall have a greater maximum width than the maximum width of the unthreaded part of the elongate body of the fastening means.

Advantageously, by having a lesser maximum width than the maximum width of the through-bore hole in part of the means for preventing the elongate body of the fastening means from falling out of the aperture in the first component or the aperture in a fixing means thereof, the unthreaded part of the elongate body of the fastening means is capable of receiving the at least part of the means for preventing the elongate body of the fastening means from falling out of the aperture in the first component or the aperture in a fixing means thereof around or about the outer perimeter of the elongate body of the fastening means.

Further advantageously, by having a greater maximum width than the maximum width of the through-bore hole in part of the means for preventing the elongate body of the fastening means from falling out of the aperture in the first component or the aperture in a fixing means thereof, the threaded part of the elongate body of the fastening means stops the means for preventing the elongate body of the fastening means from falling out of the aperture in the first component or the aperture in a fixing means thereof along the length of the elongate body of the fastening means. This is achieved by having the means for preventing the elongate body of the fastening means from falling out of the aperture in the first component or the aperture in a fixing means thereof along the length of the elongate body of the fastening means rest on the shoulder created between the difference in maximum widths of the threaded and unthreaded parts of the elongate body respectively at a location along the length of the elongate body of the fastening means.

Ideally, at least part of the means for preventing the fastening means from falling out of the aperture of the first component and/or an appropriate fixing means thereof comprises a discontinuous member.

Ideally, at least part of the means for preventing the fastening means from falling out of the aperture of the first component and/or an appropriate fixing means thereof comprises a discontinuous annular disc.

Ideally, the means for receiving the elongate body comprising an opening for receiving the elongate body.

Ideally, the means for receiving the elongate body comprising an opening creating a channel.

Ideally, the means for receiving the elongate body comprising an opening leading to a channel for receiving the elongate body of the fastening means.

Ideally, the channel for receiving the elongate body corresponds to a part of the cross-sectional shape of the elongate body.

Ideally, at least part of the means for preventing the fastening means from falling out of the aperture of the first component and/or an appropriate fixing means thereof comprises engagement means.

Ideally, the means for receiving the elongate body comprises engagement means.

Ideally, the channel for receiving the elongate body comprises engagement means.

Ideally, the engagement means of the channel comprise adaptions for releasably coupling the part of the means for preventing the fastening means from falling out of the aperture of the first component and/or an appropriate fixing means thereof to the elongate body of the fastening means.

Ideally, the engagement means comprises gripping means.

Ideally, the engagement means comprises compression and expansion means.

Ideally, the compression and expansion means comprises at least one recess.

Ideally, the compression and expansion means comprises at least one recess extending outwardly from the internal facing surface of the means for preventing the fastening means from falling out of the aperture of the first component and/or an appropriate fixing means thereof.

By extending outwardly we mean the recess extends from the internal facing surface of the means for preventing the fastening means from falling out of the aperture of the first component and/or an appropriate fixing means thereof in a direction away from the elongate body of the fastening means in situ.

Ideally, the compression and expansion means comprises a plurality of recesses.

Ideally, the compression and expansion means comprises a plurality of recesses extending outwardly from the internal facing surface of the means for preventing the fastening means from falling out of the aperture of the first component and/or an appropriate fixing means thereof.

Ideally, the compression and expansion means comprises a plurality of intermittent recesses extending outwardly from the internal facing surface of the means for preventing the fastening means from falling out of the aperture of the first component and/or an appropriate fixing means thereof.

Ideally, the engagement means comprises the inwardly extending protrusions between the intermittent recesses of the compression and expansion means on the internal facing surface of the means for preventing the fastening means from falling out of the aperture of the first component and/or an appropriate fixing means thereof.

By inwardly extending we mean the protrusions between the intermittent recesses are proximal to the outer perimeter of the elongate body of the fastening means in situ.

Advantageously, the at least one recess in the discontinuous annular disc allows it to expand so as to be pressed onto or be removed from the unthreaded part of the elongate body, and to compress to allow it to clamp onto or grip around the circumference of the elongate body. This embodiment can prevent the fastening means from falling out of a range of different sized apertures in a first component by being capable of expanding or compressing its maximum width proportionate to the maximum width of the part of the elongate body of the fastening means with which it engages.

Ideally, the fastening means will be separable into two or more parts at some point along the length of the elongate body.

Ideally, at least part of the means for preventing the elongate body of the fastening means from falling out of the aperture in any direction, is capable of being movably mounted on to the elongate body as a result of the separable nature of the fastening means.

Ideally, at least part of the means for preventing the elongate body of the fastening means from falling out of the aperture shall be captivated along the elongate body of the fastening means.

Ideally, on re-assembly of the fastening means, at least part of the means for preventing the elongate body of the fastening means from falling out of the aperture shall be captivated along the elongate body of the fastening means.

Ideally, on re-assembly, at least part of the means for preventing the elongate body of the fastening means from falling out of the aperture shall be captivated along the length of the unthreaded part of the elongate body of the fastening means.

Ideally, at least part of the means for preventing the elongate body of the fastening means from falling out of the aperture will prevent the elongate body of the fastening means from falling out of the aperture in the first component and/or the appropriate fixing means thereof in one direction.

Preferably, the other part of the means for preventing the elongate body of the fastening means from falling out of the aperture will prevent the elongate body of the fastening means from falling out of the aperture in the first component and/or the appropriate fixing means thereof in a different direction.

Preferably, the other part of the means for preventing the elongate body of the fastening means from falling out of the aperture will prevent the elongate body of the fastening means from falling out of the aperture in the first component and/or the appropriate fixing means thereof in the opposite direction.

Ideally, the means for preventing the elongate body of the fastening means from falling out of the aperture of the first component comprises a member mounted on the fastening means on both sides of the aperture in the first component having a greater diameter than the diameter of the aperture.

By diameter we mean the diameter of the member when extending radially outwardly from the longitudinal axis of the elongate body.

By greater diameter we mean the diameter of the member relative to the diameter of the aperture of the first component when the members are mounted on the fastening means which is located in the aperture and the main plane of the member is orientated substantially parallel to the main plane of the first component defining the aperture therein.

Ideally, the threaded part of the elongate body of the fastening means has a greater diameter than the diameter of the unthreaded part of the elongate body of the fastening means.

Ideally, the diameter of the threaded part of the elongate body expands beyond the diameter of the unthreaded part of the elongate body thereby creating a shoulder.

Advantageously, the diameter of the threaded part of the elongate body of the fastening means will be equal to or have a slightly smaller diameter than the diameter of aperture in the first component and/or the diameter of an aperture in an appropriate fixing attachment thereof. This means that in situ it will rest on the shoulder created by the different respective diameters of the threaded and unthreaded parts of the elongate body.

Ideally, the diameter of the through-bore of part of the means for preventing the elongate body of the fastening means from falling out of the aperture in the first component should be less than the diameter of the threaded part of the partially threaded fastening means.

Preferably, the diameter of the means for preventing the elongate body of the fastening means from falling out of the aperture in the first component should be greater than the diameter of the aperture in the first component and/or the diameter of an aperture in an appropriate fixing attachment thereof.

Ideally, the diameter of the threaded part of the elongate body of the fastening means is greater than the diameter of the through-bore hole in part of the means for preventing the elongate body of the fastening means from falling out of the aperture.

Ideally, the diameter of the through-bore hole in part of the means for preventing the elongate body of the fastening means from falling out of the aperture shall have a greater diameter than the diameter of the unthreaded part of the elongate body of the fastening means.

Advantageously, the fastening means will be separable into two or more parts preferably at some point along the length of the elongate body. This allows an installer to assemble the fastening arrangement as required in situ when undertaking the installation process.

Ideally, part of the means for preventing the fastening means from falling out of the aperture in the first component in any direction is a washer-like disc.

Ideally, part of the means for preventing the fastening means from falling out of the aperture in the first component in any direction is an annular ring-shaped washer-like disc.

Ideally, part of the means for preventing the fastening means from falling out of the aperture in the first component in any direction is a continuous annular ring-shaped washer-like disc.

Ideally, part of the means for preventing the fastening means from falling out of the aperture in the first component in any direction is a discontinuous washer-like disc.

Ideally, part of the means for preventing the fastening means from falling out of the aperture in the first component in any direction is a discontinuous washer.

Ideally, part of the means for preventing the fastening means from falling out of the aperture in the first component in any direction is a broken ring-shaped washer.

Ideally, a second part of the means for preventing the fastening means from falling out of the aperture in the first component comprises a member on the other side of the aperture in the first component or the aperture in an appropriate fixing means thereof, the members comprising a bore or through-bore.

Ideally, the bore or through-bore is threaded.

Ideally, the bore or through bore of the second part is threaded.

Ideally, the diameter of the second part of the means for preventing the fastening means from falling out of the aperture in the first component is greater than the diameter of the aperture in the first component, the diameter of the appropriate fixing attachment thereof, and the diameter of the threaded part of the elongate body.

Ideally, the second part of the means for preventing the fastening means from falling out of the aperture in the first component comprises a member on the other side of the aperture in the first component or the aperture in an appropriate fixing means thereof is an expanded screw head.

Ideally, the second part of the means for preventing the fastening means from falling out of the aperture in the first component comprises a member on the other side of the aperture in the first component or the aperture in an appropriate fixing means thereof is a detachable expanded screw head.

Ideally, the second part of the means for preventing the fastening means from falling out of the aperture in the first component comprises a member on the other side of the aperture in the first component or the aperture in an appropriate fixing means thereof is a non-detachable expanded screw head.

Ideally, the first component is a covering member for a window.

Ideally, the first component is a covering member for a roof window.

Ideally, the first component is a flashing for a window.

Ideally, the first component is a flashing for a roof window.

Ideally, the appropriate fixing attachment thereof has a through bore.

Ideally, the appropriate fixing attachment thereof has a fixing mechanism, apart from the aperture of the through-bore, that allows it to attach to other objects and materials.

Ideally, the appropriate fixing means thereof is clip or bracket that attaches the flashing to the window.

Ideally, the fastening means comprises an elongate body that has a threaded part and an unthreaded part.

Ideally, the threaded part of the elongate body tapers to a point at one extreme of the elongate body.

Ideally, the unthreaded part of the fastening means is adapted for receiving the second part of the means for preventing the fastening from falling out of the aperture in the first component.

Ideally, the unthreaded part of the elongate body is somewhat threaded at the extremity of the elongate body for receiving the bore or through bore of the second part of the means for preventing the screw from falling out of the aperture in the first component.

Ideally, the fastening means is a screw.

Ideally, the fastening means is a partially threaded screw.

Ideally, the fastening means is a partially threaded screw with a detachable head.

Ideally, the fastening means is an arrangement comprising a partially threaded screw with a washer.

Ideally, the fastening means is an arrangement comprising a partially threaded screw with an annular ring-shaped washer.

Ideally, the fastening means is an arrangement comprising a partially threaded screw with a discontinuous washer.

Ideally, the fastening means is an arrangement comprising a partially threaded screw with a discontinuous annular washer.

Ideally, the fastening means is an arrangement comprising a partially threaded screw with a discontinuous washer containing adaptions.

Ideally, the fastening means is an arrangement comprising a partially threaded screw with a discontinuous annular washer containing adaptions.

Ideally, the adaptions of the discontinuous washer comprising gripping means.

Ideally, the adaptions of the discontinuous washer enable the discontinuous washer to be releasably coupled to the elongate body of the fastening means.

Ideally, the adaptions of the discontinuous washer enable the discontinuous washer to be releasably coupled to the elongate body of the fastening means by mounting the discontinuous washer on to the elongate body.

Ideally, the adaptions of the discontinuous washer enable the discontinuous washer to be releasably coupled to the elongate body of the fastening means by mounting the discontinuous washer on to the elongate body orthogonally to the longitudinal axis of the elongate body.

Ideally, the adaptions of the discontinuous washer enable the discontinuous washer to be releasably coupled to the elongate body of the fastening means by mounting the discontinuous washer on to the elongate body orthogonally to the longitudinal axis of the elongate body at some point along the length of the elongate body.

Ideally the fastening means will be made of metal, coated/galvanised metal, aluminium or any other reasonably suited material that is fit for purpose.

The skilled man will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The skilled man will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The invention will now be described with reference to the accompanying drawing which shows by way of example only one embodiment of a fixing apparatus in accordance with the invention.
Figure 1 is an exploded view of one possible embodiment of the fastening arrangement;
Figure 2 is an exploded view of the embodiment of the fastening arrangement shown in Figure 1 in situ, showing the order of the components when attaching a roof covering component to a roof structure member;
Figure 3 is a cross-section view of the embodiment shown in figure 1 in situ, i.e. when fastening the roof covering component to the roof structure member;
Figure 4 shows a perspective view of the fastening arrangement in the fastened position, attaching the roof covering component to the roof structure member;
Figure 5 is a perspective view showing a second possible embodiment of the fastening arrangement;
Figure 6 is a perspective view showing a plan view of the embodiment shown in figure 5 in situ in a roof covering component;
Figure 7 is a perspective view showing an enlarged view of the fastening arrangement as shown in figure 6;
Figure 8 is a perspective view of the fastening arrangement in situ locates in a section view of the roof covering component.
Figure 9 is a cross-sectional view of the embodiment of the fastening arrangement shown in figures 6-8 in situ in the roof covering component.

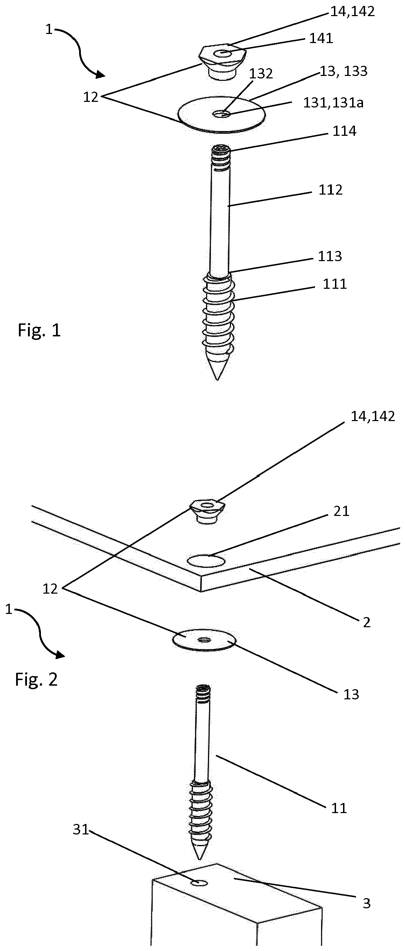

Referring to the drawings and initially to Figures 1 to 4, there is shown a fastening arrangement indicated generally by the reference numeral 1. The fastening arrangement 1 is for fastening a first component 2 to a second component 3 via an aperture 21 in the first component 2 and/or in an appropriate fixing attachment thereof (not shown). The fastening arrangement comprising an elongate body 11 and an arrangement 12 for preventing the fastening arrangement 1 from falling out of the aperture 21 in the first component 2 and/or in an appropriate fixing attachment thereof (not shown) in any direction prior to fastening and/or after unfastening the first component 2 to and/or from the second component 3.

The arrangement 12 for preventing the fastening arrangement 1 from falling out of the aperture 21 in the first component 2 and/or in an appropriate fixing attachment thereof (not shown) in any direction comprises a member 13, 14 on the fastening arrangement 1 on both sides of the aperture 21 in the first component 2, the members 13,14 having a greater maximum width than the maximum width of the aperture 21. The arrangement for preventing the fastening arrangement from falling out of the aperture in the first component and/or in an appropriate fixing attachment thereof in any direction 12 comprises an arrangement for preventing the elongate body 11 of the fastening arrangement 1 from falling out of the aperture 21 in the first component 2 and/or in an appropriate fixing attachment thereof in any direction. Therefore, the arrangement for preventing the elongate body of the fastening arrangement from falling out of the aperture in any direction 12 comprises a member 13,14 on the fastening arrangement 1 on both sides of the aperture 21 in the first component 2, the members 13,14 having a greater maximum width than the maximum width of the aperture 21. By width we mean the width of the member 13,14 when extending radially outwardly from the longitudinal axis of the elongate body 11. By maximum width we mean the maximum width of the member 13,14 relative to the width of the aperture 21 of the first component 2 when the members 13,14 are mounted on the fastening arrangement 1 which is located in the aperture 21 and the members 13,14 are orientated substantially parallel to the main plane of the first component 2 defining the aperture 21 therein.

The elongate body 11 of the fastening arrangement 1 has a threaded part 111 and an unthreaded part 112. The threaded part 111 of the elongate body 11 of the fastening arrangement 1 has a maximum width that is greater than the maximum width of the unthreaded part 112 of the elongate body 11 of the fastening arrangement 1. The maximum width of the threaded part 111 of the elongate body 11 expands beyond the maximum width of the unthreaded part 112 of the elongate body 11, thereby defining a shoulder 113. The maximum width of the threaded part 111 of the elongate body 11 of the fastening arrangement 1 will be equal to or have a slightly smaller maximum width than the maximum width of the aperture 21 in the first component 2 and/or the maximum width of an aperture in an appropriate fixing attachment thereof (not shown). The maximum width of the arrangement 12 for preventing the fastening arrangement 1 from falling out of the aperture 21 of the first component 2 should be greater than the maximum width of the aperture 21 in the first component 2 and/or the maximum width of an aperture in a fixing attachment thereof (not shown). The maximum width of the arrangement 12 for preventing the elongate body 11 of the fastening arrangement 1 from falling out of the aperture 21 of the first component 2 should be greater than the maximum width of the aperture 21 in the first component 2 and/or the maximum width of an aperture in a fixing attachment thereof (not shown).

At least part of the arrangement 12 for preventing the fastening arrangement 1 from falling out of the aperture 21 of the first component 2 and/or an appropriate fixing attachment thereof (not shown) comprises a channel 131 for receiving the elongate body 11. The channel 131 for receiving the elongate body 11 enables the arrangement 12 for preventing the fastening arrangement 1 from falling out of the aperture 21 of the first component 2 and/or an appropriate fixing attachment thereof (not shown) to receive at least part of the elongate body 11. The channel 131a for receiving the elongate body 11 corresponds to the cross-sectional shape of the elongate body 11. The channel 131 for receiving the elongate body 11 comprising an elongate body engagement portion 132. The engagement portion 132 comprising the internal facing face 132 of the receiving channel 131. By internal facing face 132 we mean the face, edge or border of receiving channel 131 that is located proximal to the outer perimeter of the elongate body 11 of the fastening arrangement 1 in situ.

In the first possible embodiment of figures 1 - 4, at least part of the arrangement 12 for preventing the fastening arrangement 1 from falling out of the aperture 21 of the first component 2 and/or an appropriate fixing attachment thereof (not shown) comprises a continuous member 133. The at least part of the arrangement 12 for preventing the fastening arrangement 1 from falling out of the aperture 21 of the first component 2 and/or an appropriate fixing attachment thereof (not shown) comprises a continuous annular disc 133. The at least part of the arrangement 12 for preventing the fastening arrangement 1 from falling out of the aperture 21 of the first component 2 and/or an appropriate fixing attachment thereof (not shown) comprises an annular disc 133. The channel for receiving the elongate body 131 comprising a through-bore hole 131 a for receiving the elongate body 11. In this embodiment, the through-bore hole 131a is for receiving the unthreaded part 112 of the elongate body 11.

The maximum width of the through-bore hole 131 of the part of the arrangement 12 for preventing the fastening arrangement 1 from falling out of the aperture 21 of the first component 2 and/or an aperture of an appropriate fixing attachment thereof (not shown) is less than the maximum width of the threaded part 111 of the elongate body 11. The maximum width of the through-bore hole 131a of the part of the arrangement 12 for preventing the elongate body 11 of the fastening arrangement 1 from falling out of the aperture 21 of the first component 2 and/or an aperture of an appropriate fixing attachment thereof (not shown) is less than the maximum width of the threaded part 111 of the elongate body 11. The maximum width of the through-bore hole 131a in part of the arrangement 12 for preventing the fastening arrangement from falling out of the aperture 12 shall have a greater maximum width than the maximum width of the unthreaded part 112 of the elongate body 11 of the fastening arrangement 1. The maximum width of the through-bore hole 131a in part of the arrangement 12 for preventing the elongate body 11 of the fastening arrangement 1 from falling out of the aperture 12 shall have a greater maximum width than the maximum width of the unthreaded part 112 of the elongate body 11 of the fastening arrangement 1.

By having a lesser maximum width than the maximum width of the through-bore hole 131a in part of the arrangement 12 for preventing the elongate body 11 of the fastening arrangement 1 from falling out of the aperture 21 in the first component 2 or the aperture in a fixing attachment thereof (not shown), the unthreaded part 111 of the elongate body 11 of the fastening arrangement 1 is capable of receiving the at least part of the arrangement 12 for preventing the elongate body 11 of the fastening arrangement 1 from falling out of the aperture 21 in the first component 2 or the aperture in a fixing attachment thereof (not shown) around or about the outer perimeter of the elongate body 11 of the fastening arrangement 1. Furthermore, by having a greater maximum width than the maximum width of the through-bore hole 131a in part of the arrangement 12 for preventing the elongate body 11 of the fastening arrangement 1 from falling out of the aperture 21 in the first component 2 or the aperture in a fixing attachment thereof (not shown) the threaded part 111 of the elongate body 11 of the fastening arrangement 1 stops the arrangement 12 for preventing the elongate body 11 of the fastening arrangement 1 from falling out of the aperture 21 in the first component 2 or in an appropriate fixing attachment thereof (not shown) along the length of the elongate body 11 of the fastening arrangement 1. This is achieved by having the arrangement 12 for preventing the elongate body 11 of the fastening arrangement 1 from falling out of the aperture 21 in the first component 2 or in an appropriate fixing arrangement thereof (not shown) rest on the shoulder 113 created between the difference in maximum widths of the threaded 111 and unthreaded 112 parts of the elongate body 11 respectively at a location along the length of the elongate body 11 of the fastening arrangement 1.

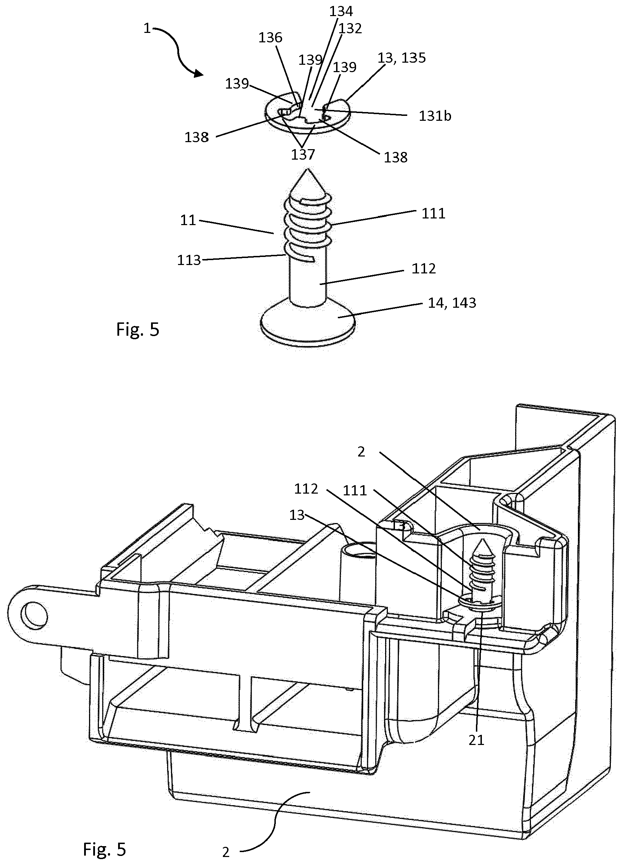

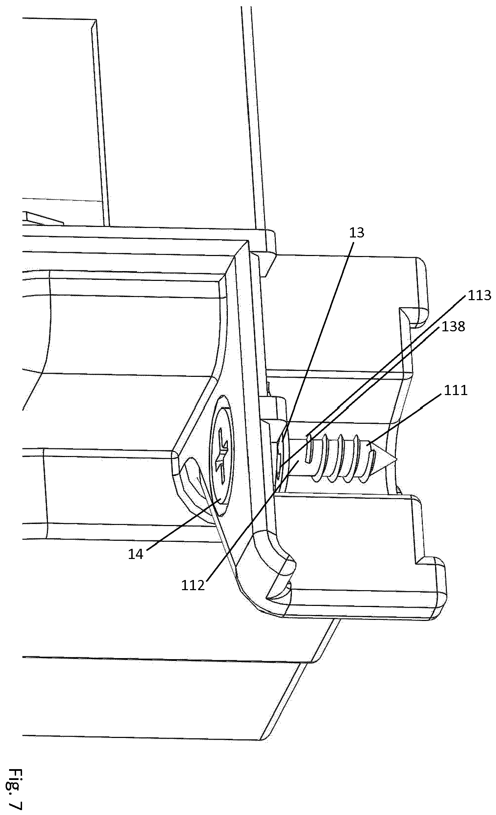

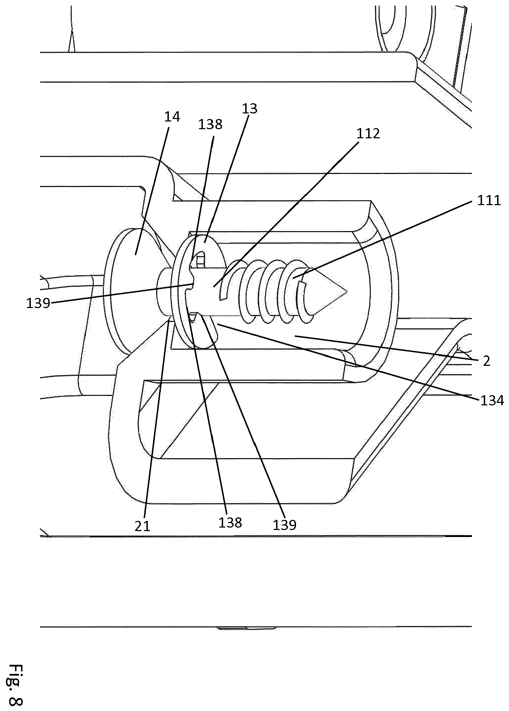

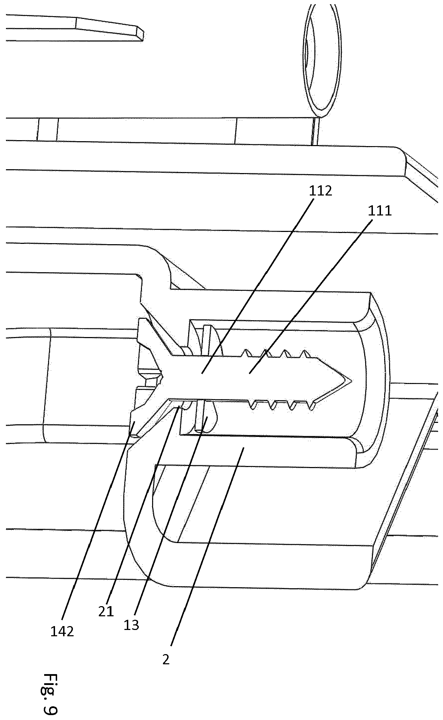

In another embodiment illustrated in Figures 5 - 9, the at least part of the arrangement 12 for preventing the fastening arrangement 1 from falling out of the aperture 21 of the first component 2 and/or an appropriate fixing attachment thereof (not shown) comprises a discontinuous member 135. The at least part of the arrangement 12 for preventing the elongate body 11 of the fastening arrangement 1 from falling out of the aperture 21 of the first component 2 and/or an appropriate fixing attachment thereof (not shown) comprises a discontinuous annular disc 135. In this embodiment the channel 131 for receiving the elongate body 11 comprising an opening 134 for receiving the elongate body 11. The channel 131 for receiving the elongate body 131 comprising an opening 134 creating a channel 131b. The channel 131 for receiving the elongate body 11 comprising an opening 134 leading to a channel 131b for receiving the elongate body 11 of the fastening arrangement 1. The channel 131b for receiving the elongate body 11 corresponds to a part of the cross-sectional shape of the elongate body 11.

At least part of the arrangement 12 for preventing the fastening arrangement 1 from falling out of the aperture 21 of the first component 2 and/or an appropriate fixing attachment thereof (not shown) comprises an engagement portion 132. The channel 131b for receiving the elongate body 11 comprises an engagement portion 132.

The engagement portion 132 of the channel 131b comprises adaptions 138,139 for releasably coupling the part of the arrangement 12 for preventing the fastening arrangement 1 from falling out of the aperture 21 of the first component 2 and/or an appropriate fixing attachment thereof (not shown) to the elongate body 11 of the fastening arrangement 1. The engagement portion 132 comprises gripping surfaces 136. The engagement portion 132 comprises compression and expansion members 137. The compression and expansion members 137 comprises at least one recess 138. The compression and expansion members 137 comprises at least one recess 138 extending outwardly from the internal facing surface, i.e. the face most proximal to the outer perimeter of the elongate body 11 of the fastening arrangement 1, of the discontinuous annular disc 135. By extending outwardly we mean the recess 138 extends from the internal facing surface of the discontinuous annular disc 135 in a direction away from the elongate body 11 of the fastening arrangement 1 in situ.

The compression and expansion members 137 comprise a plurality of recesses 138. The compression and expansion members 137 comprise a plurality of recesses 138 extending outwardly from the engagement portion 132. The compression and expansion members 137 comprises a plurality of intermittent recesses 138 extending outwardly from the engagement portion 132.

The engagement portion 132 comprises the compression and expansion members 137 and the inwardly extending protrusions 139 between the intermittent recesses 138 of the compression and expansion members 139 on the discontinuous annular disc 135. By inwardly extending we mean the protrusions 139 between the intermittent recesses 138 are proximal to the outer perimeter of the elongate body 11 of the fastening arrangement 1 in situ.

The at least one recess 138 in the discontinuous annular disc 135 allows it to expand so as to be pressed onto or be removed from the unthreaded part 112 of the elongate body 11, and to compress to allow it to clamp onto or grip around the circumference of the elongate body 11. This embodiment can prevent the fastening arrangement 1 from falling out of a range of different sized apertures 21 in a first component 2 by being capable of expanding or compressing its maximum width proportionate to the maximum width of the part of the elongate body 11 of the fastening arrangement 1 with which it engages.

Referring now to the first embodiment of Figures 1 - 4. The fastening arrangement 1 will be separable into two or more parts at some point along the length of the elongate body 11. At least part of the arrangement 12 for preventing the elongate body 11 of the fastening arrangement 1 from falling out of the aperture 21 in any direction 12 is capable of being movably mounted on to the elongate body 11 as a result of the separable nature of the fastening arrangement 1. At least part of the arrangement 12 for preventing the elongate body 11 of the fastening arrangement 1 from falling out of the aperture 12 shall be captivated along the elongate body 11 of the fastening arrangement 1. On re-assembly of the fastening arrangement 1 at least part of the arrangement 12 for preventing the elongate body 11 of the fastening arrangement 1 from falling out of the aperture 12 shall be captivated along the elongate body 11 of the fastening arrangement 1. On re-assembly of the fastening arrangement 1 at least part of the arrangement 1 for preventing the elongate body 11 of the fastening arrangement 1 from falling out of the aperture 21 shall be captivated along the unthreaded part 112 of the elongate body 11 of the fastening arrangement 1.

Referring again to both embodiments, at least part of the arrangement 12 for preventing the elongate body 11 of the fastening arrangement 1 from falling out of the aperture 21 will prevent the elongate body 11 of the fastening arrangement 1 from falling out of the aperture 21 in the first component 2 and/or the appropriate fixing attachment thereof (not shown) in one direction. The other part of the arrangement 12 for preventing the elongate body 11 of the fastening arrangement 1 from falling out of the aperture 21 will prevent the elongate body 11 of the fastening arrangement 1 from falling out of the aperture 21 in the first component 2 and/or the appropriate fixing attachment thereof (not shown) in a different direction. The other part of the arrangement 12 for preventing the elongate body of the fastening arrangement from falling out of the aperture will prevent the elongate body 11 of the fastening arrangement 1 from falling out of the aperture 21 in the first component 2 and/or the appropriate fixing attachment thereof (not shown) in the opposite direction.

The arrangement 12 for preventing the elongate body 11 of the fastening arrangement 1 from falling out of the aperture 21 of the first component 2 comprises a member 13,14 mounted on the fastening arrangement 1 on both sides of the aperture 21 in the first component 2 having a greater diameter than the diameter of the aperture 21. By diameter we mean the diameter of the member 13,14 when extending radially outwardly from the longitudinal axis of the elongate body 11. By greater diameter we mean the diameter of the member relative to the diameter of the aperture 21 of the first component 2 when the members 13,14 are mounted on the fastening arrangement 1 which is located in the aperture 21 and the main plane of the member is orientated substantially parallel to the main plane of the first component 2 defining the aperture 21 therein.

The diameter of the threaded part of the elongate body 11 of the fastening arrangement 1 will be equal to or have a slightly smaller diameter than the diameter of aperture 21 in the first component 2 and/or the diameter of an aperture in an appropriate fixing attachment thereof (not shown). This means that in situ it will rest on the shoulder 113 created by the different respective diameters of the threaded 111 and unthreaded 112 parts of the elongate body 11.

The diameter of the through-bore 131 of annular disc 133 or discontinuous annular disc 135 should be less than the diameter of the threaded part 111 of the partially threaded fastening arrangement 1. The diameter of the annular disc 133 or the diameter of the discontinuous annular disc 135 should be greater than the diameter of the aperture 21 in the first component 2 and/or the diameter of an aperture in a fixing attachment thereof (not shown). The diameter of the threaded part 111 of the elongate body 11 of the fastening arrangement 1 is greater than the diameter of the through-bore hole 131a in the annular disc 133 or the diameter of the channel 131b in the discontinuous annular disc 135. The diameter of the through-bore hole 131a in the annular disc 133 or the diameter of the channel 131b in the discontinuous annular disc 135 shall have a greater diameter than the diameter of the unthreaded part 112 of the elongate body 11 of the fastening arrangement 1.

The fastening arrangement 1 will be separable into two or more parts preferably at some point along the length of the elongate body 1. This allows an installer to assemble the fastening arrangement 1 as required in situ when undertaking the installation process.

Part of the arrangement 12 for preventing the fastening arrangement 1 from falling out of the aperture 21 in the first component 2 in any direction is a washer-like disc 133. Part of the arrangement 12 for preventing the fastening arrangement 1 from falling out of the aperture 21 in the first component 2 in any direction is an annular ring-shaped washer-like disc 133. Part of the arrangement 12 for preventing the fastening arrangement 1 from falling out of the aperture 21 in the first component 2 in any direction is a continuous annular ring-shaped washer-like disc 133. Part of the arrangement 12 for preventing the fastening arrangement 1 from falling out of the aperture 21 in the first component 2 in any direction is a discontinuous washer-like disc 135. Part of the arrangement 12 for preventing the fastening arrangement 1 from falling out of the aperture 21 in the first component 2 in any direction is a discontinuous washer 135. Part of the arrangement 12 for preventing the fastening arrangement 1 from falling out of the aperture 21 in the first component 2 in any direction is a broken ring-shaped washer 135.

Again, referring to the first embodiment, a second part of the arrangement 12 for preventing the fastening arrangement 1 from falling out of the aperture 21 in the first component 2 comprises a member 14 on the other side of the aperture 21 in the first component 2 or the aperture in an appropriate fixing attachment thereof (not shown), the members comprising a bore or through-bore 141. The bore or through-bore is threaded 141. The bore or through bore 141 of the second part is threaded. The diameter of the second part 14 of the arrangement 12 for preventing the fastening arrangement 1 from falling out of the aperture 21 in the first component 12 is greater than the diameter of the aperture 21 in the first component 2, the diameter of the appropriate fixing attachment thereof (not shown), and the diameter of the threaded part 111 of the elongate body 11. The second part 14 of the arrangement 12 for preventing the fastening arrangement 1 from falling out of the aperture 21 in the first component 2 is an expanded screw head 14. The second part 14 of the arrangement 12 for preventing the fastening arrangement 1 from falling out of the aperture 21 in the first component 2 is a detachable expanded screw head 142.

Referring to the second embodiment, the second part 14 of the arrangement 12 for preventing the fastening arrangement 1 from falling out of the aperture 21 in the first component 2 is a non-detachable expanded screw head 143.

Again, referring to both embodiments, the first component 2 is a covering member for a window 2. The first component 2 is a covering member 2 for a roof window. The first component 2 is a flashing 2 for a window. The first component 2 is a flashing 2 for a roof window. The appropriate fixing attachment thereof has a through bore (not shown). The appropriate fixing attachment thereof has a fixing mechanism, apart from the aperture of the through-bore, that allows it to attach to other objects and materials (not shown). The appropriate fixing attachment thereof is clip or bracket that attaches the flashing to the window (not shown).

The threaded part 111 of the elongate body 11 tapers to a point at one extreme of the elongate body 11. The unthreaded part 112 of the elongate body 11 is adapted 114 for receiving the detachable expanded screw head 142. The unthreaded part 112 of the elongate body 11 is somewhat threaded 114 at the extremity of the elongate body 11 for receiving the bore or through bore 141 of the detachable expanded screw head 142.

The fastening arrangement 1 is a screw 11,14. The fastening arrangement 1 is a partially threaded screw 11,14. The fastening arrangement 1 is a partially threaded screw 11,14 with a detachable head 142. The fastening arrangement 1 is an arrangement comprising a partially threaded screw 11,14 with a washer 13. The fastening arrangement is an arrangement comprising a partially threaded screw 11,14 with an annular ring-shaped washer 133. The fastening arrangement is an arrangement comprising a partially threaded screw 11,14 with a discontinuous washer 135. The fastening arrangement is an arrangement comprising a partially threaded screw 11,14 with a discontinuous annular washer 135. The fastening arrangement is an arrangement comprising a partially threaded screw 11,14 with a discontinuous washer containing adaptions. The adaptions of the discontinuous washer 135 comprising an engagement portion 132. The adaptions of the discontinuous washer 135 enable the discontinuous washer 135 to be releasably coupled to the elongate body 11 of the fastening arrangement 1. The adaptions of the discontinuous washer 135 enable the discontinuous washer 135 to be releasably coupled to the elongate body 11 of the fastening arrangement 1 by mounting the discontinuous washer on to the elongate body 11. The adaptions of the discontinuous washer 135 enable the discontinuous washer 135 to be releasably coupled to the elongate body 11 of the fastening arrangement 1 by mounting the discontinuous washer 135 on to the elongate body 11 orthogonally to the longitudinal axis of the elongate body 11. The adaptions of the discontinuous washer 135 enable the discontinuous washer 135 to be releasably coupled to the elongate body 11 of the fastening arrangement 1 by mounting the discontinuous washer 135 on to the elongate body 11 orthogonally to the longitudinal axis of the elongate body 11 at some point along the length of the elongate body 11. The fastening arrangement 1 will be made of metal, coated/galvanised metal, aluminium or any other reasonably suited material that is fit for purpose.

In fig 1, there is shown a configuration of the fastening arrangement 1 as a captive screw arrangement 11,13,14 indicated generally by the reference numeral 1. It is comprised of an elongate body 11 consisting of an unthreaded upper shaft 112 and a threaded lower shaft 111 that tapers to a point at the lower most extremity of the elongate body 11. The diameter of the threaded part 111 of the screw 1 is wider than the diameter of the upper unthreaded shaft 112. The top of the elongate body 11 is threaded 114 as necessary to receive the second part 14 of the arrangement for preventing the elongate body from falling through the aperture 21 in the flashing 2. i.e. the expanded screw head 14. On the uppermost face of the shaft 11 there is a groove or indentation or crosshair that allows the installer to screw the fastener 1 into the frame, once the head 14 has been firmly attached. The head 14 can be of any shape that is compatible with the affixing adapters that are used with tools or power tools within the desired skilled trade or profession to fix the head 14 onto the elongate body 11. Alternatively, it allows manual tightening of the head 14 onto the elongate body 11.

The head 14 tapers down into a cylindrical shape at its base in this embodiment, and has a through-bore 141 that is threaded for co-operating with the threading 114 at the top of the unthreaded part 112 of the elongate body 11.

In this embodiment, a washer 13 forms a first part 13 of the arrangement 12 that prevents the elongate body 11 from falling through the aperture in the flashing 12 or an appropriate fixing attachment thereof (not shown). The washer 13 is slid over the top of the elongate body 11 and is held captive along the unthreaded part 112 of the elongate body 11 between the screw head 14 and the threaded part 111 of the elongate body 11. The central aperture 131 of the washer 13 is of sufficient diameter to be greater than the unthreaded part 112 of the elongate body 11 and less than the diameter of the threaded part 111. The washer 13 abuts against the shoulder 113 defined between the threaded 111 and unthreaded part 112 of the elongate body 11.

Fig 2 shows an exploded view of this possible embodiment of the fastening arrangement 1 aligned in order with the aperture 21 of the roof covering 2 and the bored channel 31 in the roof structure member 3, however the arrangement has not yet been assembled and fastened, i.e. it does not yet affix the flashing 2 to the roof truss/batten 3. In this arrangement, the head of the screw 14 and the washer-like disc 13 are positioned either side of the aperture 21 in the flashing 2.

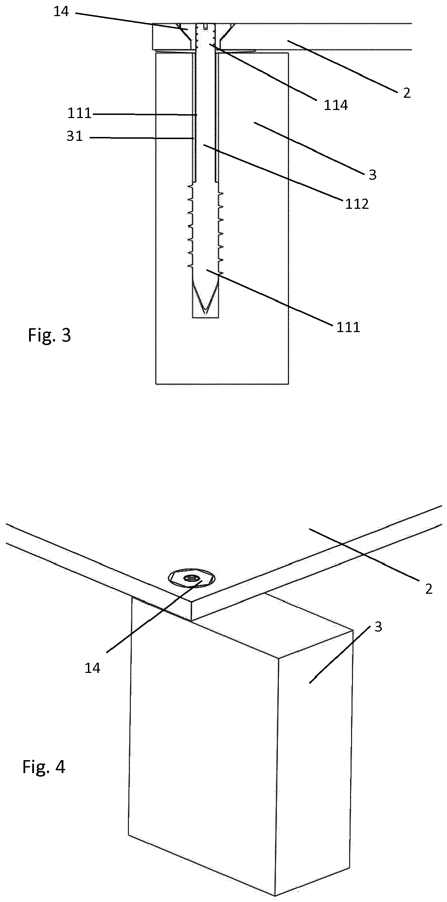

Fig 3 shows a cross section of the embodiment of the fastening arrangement from figures 1 & 2 in situ, i.e. fastening the flashing 2 to the timber frame of the roof window 3.

Fig 4 shows a top plan view of the embodiment in the same position as figure 3, i.e. the fully assembled screw 1 in its final position affixing the flashing 2 to the timber frame of the roof window 3.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A fastening arrangement for fastening a first component to a second component via an aperture in the first component and/or in an appropriate fixing attachment thereof, the fastening means comprising an elongate body and means for preventing the fastening means from falling out of the aperture in the first component and/or in an appropriate fixing attachment thereof in any direction prior to fastening and/or after unfastening the first component to and/or from the second component.

2. A fastening arrangement as claimed in claim 1 wherein the means for preventing the fastening means from falling out of the aperture in any direction comprises a member on the fastening means on both sides of the aperture in the first component, the members having a greater maximum width than the maximum width of the aperture.

3. A fastening arrangement as claimed in any of the preceding claims wherein the elongate body of the fastening means comprises a threaded part and an unthreaded part.

4. A fastening arrangement as claimed in claim 3 wherein the threaded part of the elongate body of the fastening means has a maximum width that is greater than the maximum width of the unthreaded part of the elongate body of the fastening means.

5. A fastening arrangement as claimed in any of the preceding claims wherein the maximum width of the means for preventing the fastening means from falling out of the aperture of the first component should be greater than the maximum width of the aperture in the first component and/or the maximum width of an aperture in a fixing attachment thereof.

6. A fastening arrangement as claimed in any of the preceding claims wherein at least part of the means for preventing the elongate body of the fastening means from falling out of the aperture of the first component and/or an appropriate fixing means thereof comprises a through-bore hole for receiving the elongate body.

7. A fastening arrangement as claimed in claim 6 when dependent on claim 3 wherein the maximum width of the through-bore of part of the means for preventing the fastening means from falling out of the aperture of the first component and/or an aperture of an appropriate fixing means thereof is less than the maximum width of the threaded part of the elongate body.

8. A fastening arrangement as claimed in claim 6 and claim 7 when dependent on claim 3 wherein the maximum width of the through-bore hole in part of the means for preventing the fastening means from falling out of the aperture shall have a greater maximum width than the maximum width of the unthreaded part of the elongate body of the fastening means.

9. A fastening arrangement as claimed in any of the preceding claims wherein the fastening means will be separable into two or more parts at some point along the length of the elongate body.

10. A fastening arrangement as claimed in claim 9 wherein at least part of the means for preventing the elongate body of the fastening means from falling out of the aperture in any direction, is capable of being movably mounted on to the elongate body as a result of the separable nature of the fastening means.

11. A fastening arrangement as claimed in any of the preceding claims wherein at least part of the means for preventing the elongate body of the fastening means from falling out of the aperture will prevent the elongate body of the fastening means from falling out of the aperture in the first component and/or the appropriate fixing means thereof in one direction.

12. A fastening arrangement as claimed in any of the preceding claims wherein at least part of the means for preventing the elongate body of the fastening means from falling out of the aperture shall be captivated along the elongate body of the fastening means.

13. A fastening arrangement as claimed in any of the preceding claims wherein the unthreaded part of the fastening means is adapted for receiving the second part of the means for preventing the fastening from falling out of the aperture in the first component.

14. A fastening arrangement as claimed in any of the preceding claims wherein the unthreaded part of the elongate body is somewhat threaded at the extremity of the elongate body for receiving the bore or through bore of the second part of the means for preventing the screw from falling out of the aperture in the first component.

15. A fastening arrangement as claimed in any of the preceding claims wherein at least part of the means for preventing the fastening means from falling out of the aperture of the first component and/or an appropriate fixing means thereof comprises a discontinuous member.
